# EUROPEAN PATENT APPLICATION

(11) **EP 3 460 283 A1**
(43) Date of publication of application: **27.03.2019**
(21) Application number: 18194600.5
(22) Date of filing: 14.09.2018
(51) Int. Cl.: F16F 1/40, E04B 1/62, E04H 9/02

(54) **ISOLATOR DEVICE AND METHOD FOR MAKING SAID ISOLATOR DEVICE**

(30) Priority: 25.09.2017 IT 201700107082
(71) Applicant: Italgum S.r.l., 36063 Zane' (Vicenza) (IT)
(72) Inventor: MUNARETTO, Vittorio, 36063 Zane' (Vicenza) (IT)
(74) Representative: Feltrinelli, Secondo Andrea

(57) **Abstract**

Isolator device (1), such as for example a seismic isolator (1A) or an abutment element (1B) for constructions, for example buildings, bridges, large structures, infrastructures, etc. or non-structural works, for example pedestals for art works, e.g. statues or the like, for furniture, for industrial machinery, etc., provided with an overlying structure, for isolating or separating or spacing the overlying structure of the construction and a part of the construction integral with the foundations or the ground in order to dissipate and/or absorb the forces or energy generated by an earthquake or by a dynamic stress to which the construction itself is subjected, wherein the isolator device (1) comprises a plurality of first layers (6, 16) and a plurality of second layers (7), wherein the first layers (6, 16) and the second layers (7) are interposed or staggered with respect to each other, wherein the second layers (7) comprise a material having a mechanical behavior that is variable as a function of the type and/or intensity of the forces or energy generated by an earthquake or by a dynamic stress to which the isolator device (1) is subjected.

## Description

### TECHNICAL FIELD OF THE INVENTION

The present invention relates to an isolator device, such as a seismic isolator or to an abutment element for constructions, such as for example buildings, bridges, large facilities, infrastructures in general provided with an overlying structure. Constructions also refer to non-structural works such as pedestals for art works, such as for example statues or similar, furniture, industrial machinery, etc., they also provided with an overlying structure.

Such isolator device is applied to such constructions for isolating or separating or spacing the overlying structure of said construction and a part of said construction integral with the foundations or with the ground in order to dissipate and/or absorb the forces or energy generated by an earthquake or by a dynamic stress to which said construction is subjected.

In particular, the present invention relates to an isolator device, such as a seismic isolator or an abutment element, wherein said isolator device comprises at least a material whose mechanical behavior varies according to the type of stress or, in any case, according to the forces or energy generated by an earthquake or by a dynamic stress to which said construction is subjected and therefore the isolator device itself.

### STATE OF THE ART

It is known that "seismic isolators" refers to those devices that are used for isolating the support structure of a construction or a building from the ground in order to reduce or eliminate the destructive effects of an earthquake.

For the same purpose, abutment apparatuses, usually made of elastomer and steel or steel-Teflon, or oleodynamic devices, have been used in the past years in order to dissipate the energy released by the seismic event and absorb its forces.

In particular, the seismic isolators are positioned between the foundations of a construction and the respective structure (developed in height), and in this way they prevent the creation of resonance phenomena, since these phenomena are the main causes of damages caused by an earthquake.

To obtain this result, the seismic isolator or the support device must be designed *ad hoc* for the specific structure under which it has to be positioned and allows the latter to act, during the earthquake, almost like a stiff body which tends to remain steady with respect to the vibrations of the ground. At the same time, in the case of constructions of new formation, the study of buildings or infrastructures themselves has also to be modified due to the presence of such isolators within their construction as well as the conformation of the ground.

The seismic isolators of the known type, in addition to reducing the horizontal forces (and therefore the stresses within the structure), may also be able to produce a further reduction of the forces at play, if they have high values of relative damping.

The isolators currently used generally have a structure of layers in rubber or elastomer (with low or high damping) which are alternated with metal layers, usually of steel. The object of the present invention, therefore, is to provide an isolator device, such as a seismic isolator or an abutment element, which is alternative to those described above and more efficient from a safety point of view of the work itself.

The isolator device according to the present invention overcomes the drawbacks of the known art.

### OBJECTS OF THE INVENTION

An object of the present invention is to improve the prior state of the art.

A further object of the present invention is to provide an isolator device, such as a seismic isolator or an abutment element, for any type of construction, such as a building, a bridge, an infrastructure, and so on. Constructions can also refer to non-structural works such as for example pedestals for artistic works, such as for example statues or similar, for furniture, for industrial machineries, etc.

A further object of the present invention is to provide an isolator device, such as a seismic isolator or an abutment element, which allows to efficiently dissipate the forces and energy developed by an earthquake and/or by the wind and/or by particular weather conditions that generate oscillations or dynamic stresses and/or that can be added to the other dynamic actions to which the overlying construction may be subjected.

A further object of the present invention is to provide an isolator device, such as a seismic isolator or an abutment element, which is able to modify its mechanical behavior according to the type and/or intensity of the forces or stress energy to which it is subjected.

According to an aspect of the present invention, an isolator device, such as a seismic isolator or an abutment element, according to claim 1, is provided.

The dependent claims refer to preferred and advantageous embodiments of the invention.

### BRIEF DESCRIPTION OF THE DRAWINGS

The characteristics of the invention will be better understood by anyone skilled in the art by the following description and the accompanying drawings, given as a non-limiting example, wherein:

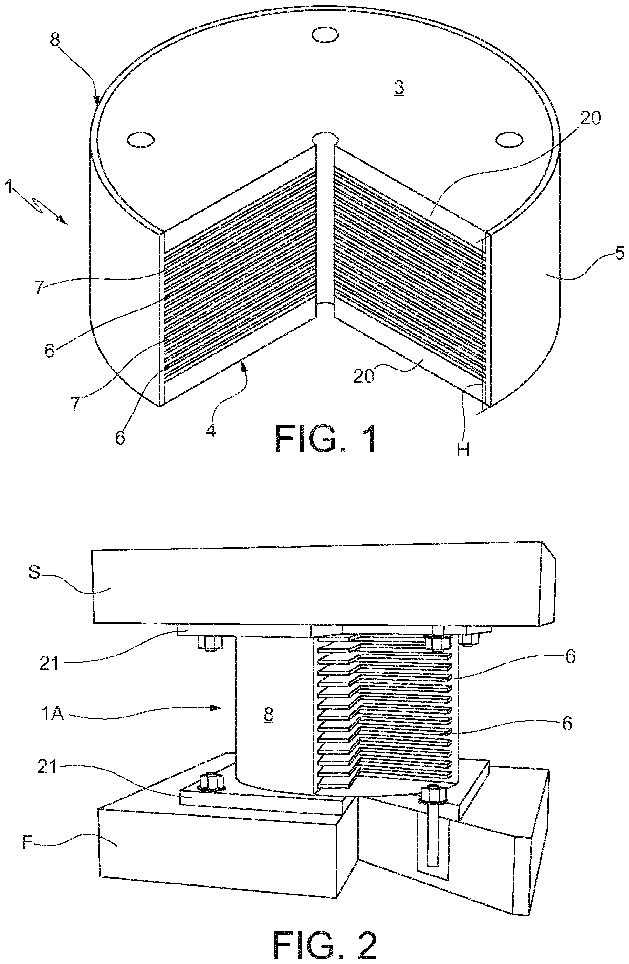

figure 1 shows a perspective view of an isolator device such as a seismic isolator according to the present invention, partially sectioned so as to view its inner part,
figure 2 shows a perspective view of the seismic isolator of figure 1, in a version in which it is inserted and fixed to a construction structure,
figure 3 shows a corresponding image of figure 2.
figure 4 shows a sectional view along the section line IV-IV of figure 5 of a seismic isolator according to the present invention,
figure 5 shows a top view of the seismic isolator of figure 4,
figure 6 shows a perspective view of an isolator device such as an abutment element according to the present invention, wherein the outer component is partially sectioned so as to view its inner part,
figure 7 shows a side view of the abutment element of figure 6, without its outer component,
figure 8 shows a sectional view of the abutment element along the section line VIII-VIII of Figure 7,
figure 9 shows a version of a component of the isolator device such as the seismic isolator or the abutment element according to the present invention.

### EMBODIMENTS OF THE INVENTION

The present invention relates to an isolator device, such as a seismic isolator or an abutment element, generally referred to with the reference number 1, for constructions, such as buildings, bridges, large structures, infrastructures in general, etc. Constructions can also refer to non-structural works such as for example pedestals for artistic works, such as for example statues or similar, for furniture, for industrial machineries, etc.

In addition, the isolator device 1 can also be used with prefabricated structures, such as industrial sheds. In this case, they can be positioned between the plinth and the structure itself, since it avoids laying a concrete element on another concrete element.

The isolator device 1 is a device able to isolate or separate or space the overlying structure of a construction and the part of the same integral with the foundations or the ground in order to dissipate and/or absorb the forces or energy generated by certain dynamic stresses, such as those caused by an earthquake and/or by wind and/or by particular weather conditions that generate oscillations and/or which can be added to the other dynamic actions to which the overlying construction may be subjected. In this way, the isolator device 1 according to the present invention is able to reduce or eliminate the destructive effects of an earthquake or of such events or dynamic stresses. The isolator device 1 is positioned below a structure of a construction or a work.

In particular, the isolator device 1 can be a seismic isolator 1A, which is positioned, in use, between the foundations F of a construction or a work and the structure S placed above them (i.e. the superstructure, or structure that develops in height outside the ground). Due to this positioning of the seismic isolator 1A, it prevents the creation of resonance phenomena (in the ground or in the structure) of the forces and/or vibrations generated by dynamic stresses (for example caused by the earthquake and/or the wind and/or from particular weather conditions that generate oscillations and/or that can be added to the other dynamic actions to which the overlying construction can be subjected, since these phenomena are the main responsible for the damages caused to the construction itself).

In a further version, the isolator device 1 may be an abutment element 1B, which is instead usually positioned below a structure of a building or a work, even without being interposed between the foundations F and the structure itself, e.g. between the pylons and the spans or the truss of a bridge, a viaduct, a flyover or a similar construction.

The abutment element 1B can be substantially similar to the abutment elements of type A, B, C, D, E or F or any other classes or subclasses.

Usually, the isolator device 1 according to the present invention, in its version as seismic isolator 1A, is positioned in particularly seismic zones while, in its version as an abutment element 1B - possibly lower than a seismic isolator - it is positioned in order to amortize oscillations or solicitations of the structure. However, these functions can also be reversed.

In addition, due to the fact that the isolator device 1 has a mechanical behavior that varies according to the type and/or intensity of the forces or energy of the dynamic stresses to which it is subjected, the present invention allows - to a single type of element - to adapt to the position in which it is installed and/or to the contingent situation, without having to study which type of seismic isolator or abutment element is the best to be applies to a particular construction or in a particular geographical area. For example, in low seismic geographic areas, seismic isolators are usually used to withstand earthquakes or events of a certain intensity. However, such isolators, faced with a high intensity event, may not be sufficiently effective, thus failing to prevent damage to the relative construction.

The isolator device 1 according to the present invention, on the other hand, varies its mechanical response based on the type of dynamic stress it is subjected, being able to respond to both low intensity forces and high intensity forces, or to different stresses based on to the specific need that is created.

The isolator device 1 according to the present invention consists of a main body 2 of substantially geometrical solid shape, such as for example a prism or a cylinder.

This main body 2 has two bases 3, 4, substantially parallel to each other and having a polygonal or circular shape.

The bases 3, 4 of the main body 2 are substantially parallel to the ground or perpendicular to a vertical direction along which the height of the construction superstructure extends.

In particular, in use, the base 3 is the upper base of the main body 2, facing the construction superstructure, while the base 4 is the lower one, facing in use towards the foundations F or the lower part of the construction structure.

The main body 2 then has a side surface 5, given by a tubular surface or by a series of side faces thereof.

The distance between the bases 3,4 is substantially equal to the height H of the side surface 5, considering for height a measurement along a direction parallel to the vertical direction of the construction.

The main body 2 comprises a series of first layers 6, parallel to each other and to the bases 3, 4.

In a version of the invention, the first layers 6 are or may be equidistant from one another.

The first layers 6 are interspersed with a plurality of second layers 7.

Therefore, globally, the main body 2 of the isolator device 1 is a multilayer. This multilayer, formed by the plurality of first and second layers 6, 7, extends for the height H of the main body 2.

The first layers 6 are in plates or discs shape having a given thickness w.

The second layers 7 have a thickness W.

The choice between thickness w and W depends on the design conditions and therefore they can vary from case to case.

In a version of the invention, the thickness w is less than or equal to the thickness W of the second layers 7.

In a further version, the thickness w is greater than the thickness W of the second layers 7.

According to the present invention, the second layers 7 consist of a material whose mechanical behavior varies according to the type of forces or energy generated by the stress to which the construction and, therefore, the isolator device 1, is subjected.

Thus, the second layers 7 comprise (at least in a version of the invention) a non-Newtonian material. Non-Newtonian material refers to a material or a fluid whose mechanical behavior varies according to the type of stress to which the isolator device 1 is subjected. For example, the strength to the application of a shear stress (strength defined in terms of viscosity or elastic modulus) varies according to the stress itself. According to a further example, the non-Newtonian behavior of a material occurs as a result of any applied force: for example, by applying a compression load to different vertical deformations, the compressive stiffness will be similarly different. Non-Newtonian material of the second layers 7 in one version of the invention is of the type having an "time-independent" behavior. That means that the non-Newtonian material of the "time-independent" behavior can recover the initial structure following the ceasing of the shearing forces action.

Non-Newtonian time-independent material may comprise a material of pseudoplastic nature (in which case, for example, the shear strength decreases by increasing shear deformation rate), such as a polymer solution and/or a colloidal dispersion. In particular, the polymers in solution which form a version of non-Newtonian materials of the second layers 7 may for example be liquid dispersions of synthetic arabic gums, such as for example tragacanth gum, arabic gum, or alginate sodium, methylcellulose, etc.

The colloidal dispersions forming a version of the non-Newtonian materials of the second layers 7 are particular mixtures in which a substance is in a finely dispersed state, intermediate between the solution and the dispersion. The colloidal dispersion therefore consists of two steps: a step consisting of a substance of microscopic dimensions and a continuous dispersing step.

The particles constituting the colloidal solutions may have dimensions ranging from 1 nm to 1 µm, according to an example of the invention.

In a further version, the non-Newtonian time-independent material may comprise a material having a dilatant nature (in which case the shear strength, for example, increases by increasing shear forces).

Among the dilatant materials of interest, elastomers, viscous silicone liquids (such as silicon marketed under the name " Silly Putty") or polymer matrix expanded materials may be used.

These are easily moldable materials when subjected to constant and continuous loads and which stiffen when subjected to impulsive loads.

The non-Newtonian material of the second layers 7 in a further version of the invention is of the type having a "time dependent" behavior. This means that the material does not completely recover the initial structure upon ceasing of the shearing forces action.

The non-Newtonian time-dependent material according to the present invention may be of a thixotropic nature (in which case the shear strength decreases by increasing the shear force application time and an effort-deformation cycle typically encloses a characteristic hysteresis area) or be of a rheopectic type (in which case the shear strength increases along with the shear force application time and an effort-deformation cycle typically encloses a characteristic hysteresis area).

The second layers 7 may entirely consist of the non-Newtonian material (as a single component) or it may be present as a dopant within a matrix (of a polymer or non-polymer nature).

For example, in one version of the invention, such polymer matrix comprises at least one polymer such as, for example, a natural or synthetic elastomer and/or a mixture of natural and/or synthetic elastomers, or rubber or a plastic material, etc.

As mentioned above, the isolator device 1 comprises first layers 6.

The first layers 6 have high stiffness and compressive strength properties.

In a version of the invention, the first layers 6 are made of a metallic material, for example steel, or of a composite material or of a polymer material.

In the version in which the first layers 6 are made of steel, this - according to the specific regulations in this regard - is S235 steel (corresponding to Fe360). S235 steel has tensile strength around 360 Mpa and an elastic modulus around 200 Gpa. The type of steel usually used, however, can be chosen by the designer and can also be S375 or S355.

In the version in which the first layers 6 are made of a composite material, the latter comprises a composite material formed by a matrix, such as for example a polymer matrix, and a plurality of reinforcing elements (e.g. fibers). The presence of reinforcing elements, such as for example carbon fibers, in the composite material ensures superior performances and stiffness than other types of fibers or a material without thereof.

In a still further version, the composite material constituting the first layers 6 may comprise fabrics made of natural fibers, such as linen and/or hemp, embedded within a matrix. Such fabrics are lighter than, for example, glass fibers and therefore, they are able to dissipate and/or absorb the vibrations or the dynamic stresses to which the isolator device 1 is subjected, without weighing down the structure.

The polymer matrix comprises a material consisting of one or more polymers, such as elastomers, plastics, thermoplastic materials or polymers (such as, for example, Nylon or ABS), or thermosetting polymers, such as an epoxy resin or a polyester or a phenolic resin, etc.

The polymer matrix can, therefore, be constituted by a single polymer or a mixture of several polymers.

The presence of epoxy resins in the matrix is preferable, in some versions of the invention, since they determine high mechanical and/or cryogenic performances.

Polymer matrix material refers to a material whose constitutive element (which confers the main mechanical, thermal and chemical-physical properties to the material itself) is a polymer matrix. Such polymer matrix can be doped with any chemical/physical process or necessary agent to confer certain properties to the material (e.g. cross-linking agents, antioxidants, antiozonants, accelerators, activators, inert fillers, active fillers, photosensitive, thermosensitive materials, adhesion promoters, flame retardants, etc.). In a version of the invention, such composite material comprises, as reinforcing elements, carbon fibers or glass fibers or ceramic fibers or aramid fibers, such as for example Kevlar fibers or a mixture of two or more of the following: carbon fibers, glass fibers, ceramic fibers, aramid fibers, such as Kevlar fibers, etc.

The composite material - comprising reinforcing elements or carbon fibers - comprises, in a version of the invention, a plate of the matrix material (preferably polymer) obtained by incorporating, inside the matrix itself, a fabric or a plurality of fabrics in multilayer of reinforcement elements or carbon fiber. The fibers pattern that composes a layer or at least one layer of the fabric determines the value of the tensile strength of the first layer 6. For example, if the fibers pattern or layers is perpendicular to each other, there will be a greater tensile strength then when the fibers and/or the different layers of fabric have a pattern parallel to each other.

Furthermore, if the fiber is unidirectional, there will be tensile strength only along that direction, alternatively to strength on several directions when the fibers have orientations along different directions in the fabric or in the first layer 6.

The first layers 6 comprising a composite material, therefore, at least with respect to analogous metal layers, have a low specific weight, a low thermal expansion coefficient, a high mechanical strength to torsion, a high tensile strength and a high mechanical stiffness.

In a further version, the first layers 6 do not therefore comprise steel.

In an alternative version of the invention, the first layers 6 are made of a polymer or a matrix material, such as for example a polymer one, as referred to above but without reinforcing elements.

Accordingly, at least in one version of the invention, it is possible to design *ad hoc* the product, depending on the technical requirements of the application.

The function of the first layers 6, in the multilayer main body 2, is essentially structural; these first layers 6, in fact, must resist the vertical loads (such as the weight of the construction or of its structure), distributing the weight and supporting the material forming the second layers 7.

According to some illustrative and non-limiting examples of the present invention, the isolator device 1 may comprise a multilayer formed by:
i) First layers 6 in steel and second layers 7 comprising a non-Newtonian material, or
ii) First layers 6 of composite material and second layers 7 comprising a non-Newtonian material, or
iii) First layers 6 of polymer material and second layers 7 comprising a non-Newtonian material, or
iv) First layers 6 in steel and second layers 7 comprising a composite material (such as the one described above for the first layers 6) to which a non-Newtonian material is added, or
v) First layers 6 comprising a composite material and second layers 7 comprising a composite material (such as the one described above for the first layers 6) to which a non-Newtonian material is added.

The isolator device 1 may further comprise an outer casing 8, able to house the plurality of first and second layers 6, 7.

In one version of the invention, the material composing the outer casing 8 is a polymer matrix comprising at least one polymer such as, for example, a natural or synthetic elastomer and/or a mixture of natural and/or synthetic elastomers, or rubber.

The outer casing 8 constitutes the outer surface of the main body 2 and encloses or houses the multilayer formed by the first layers 6 and the second layers 7.

According to an exemplary embodiment, the outer casing 8 extends for at least 5 mm or at least 10 mm around the multilayer and/or outside the first layers 6 and the second layers 7.

The outer casing 8 protects the isolator device 1 and/or its main body 2 from oxidation which may occur due to the environment in which such devices are positioned.

For this reason, the material constituting the outer casing 8 may comprise an antioxidant and/or an antiozonant and/or an antiflame agent and/or a dielectric material. The latter, in particular, allows the material of the outer casing 8 to also be electrically isolated from the surrounding environment. The isolator device 1 according to the present invention is able to perform, at least in one of its versions, its function in a range of temperatures ranging from -40°C to +40°C. In fact, the material constituting the first layers 6 and the second layers 7 alters in a limited manner its characteristics (with variations within the regulatory limits) within this temperature range. In this way, the isolator devices 1 according to the present invention are extremely versatile, as regards the weather at which they can operate and therefore the type of construction for which they are used.

In a version of the invention, the main body comprises a number of first layers 6 ranging from 5 to 50 or preferably from 10 to 40 or even more preferably from 20 to 30. Similarly, the number of second layers 7 ranges from 5 to 50 or preferably from 10 to 40 or even more preferably from 20 to 30.

However, the number of layers, as well as their thickness, can vary from case to case and is a parameter that is usually established by the designer based on the type of construction with which the seismic isolator 1A or the abutment element 1B according to the present invention is used.

The number of layers also varies according to the type of project being performed and the type of area in which the isolator device 1 is to be used. However, due to the peculiarity of the isolator device 1 according to the present invention, it is not necessary to calculate exactly the type of device to be installed, since the behavior of the same perfectly adapts to the different situations (minor or serious they will be) to which it is subjected.

However, in general, if the number of the first layers 6 is X, the number of the second layers 7 is X + 1.

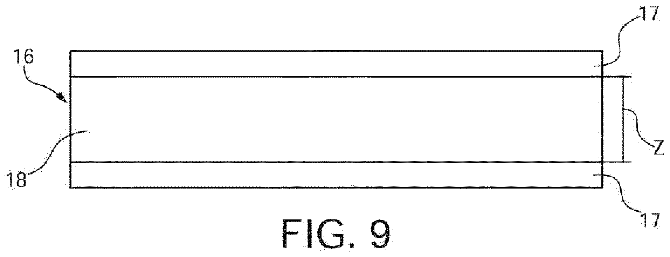

In a further version of the invention, shown in figure 9, the seismic isolator or the abutment element 1 comprises first layers 16, which may have a sandwich structure, in order to increase their stiffness and solidity and, at the same time, to implement such properties in the seismic isolator or in the abutment element 1 according to the present invention.

This version of the first layers 16 provides that each of them comprises a core 18 enclosed by two surfaces, called skins 17, at the major surfaces of the first layer 16 or parallel to the bases 3, 4 of the seismic isolator or the abutment element 1.

Such surfaces 17 can be made of a composite material comprising reinforcing elements or fibers, for example of glass or carbon or of Kevlar or ceramic or aramid. In this way, such composite material has a high Young's modulus and therefore opposes high strength to tensile and compressive stresses. This material, therefore, behaves like it was inextensible and incompressible.

The first layer 16 according to this version has its surfaces, or skins 17, in which the fibers are formed in a stratified pattern.

Also, the material that composes the inner core 18 of the sandwich is a material able to be considered incompressible. In this way, the first layer 16 has a structure with a stiffness far greater than that of a laminate having a thickness equal to the sum of the two skins 17 of the sandwich.

In addition, the material that compose the core 18 is light.

The core can be made of one of the following materials: an expanded material, an expanded material such as a thermosetting reticulated polymer produced in the presence of an expanding agent, the expanded polyurethane, or an alveolar material (honeycomb), such as example for example a metallic or plastic material having a honeycomb structure (cells), such as alveolar aluminium, alveolar polycarbonate, alveolar polypropylene, etc.

The expanded material has a compressive strength that is determined by density: high density corresponds to a higher compressive strength.

The core 18 has a thickness Z, given by the distance between the two surfaces or skins 17. The greater the thickness Z, the greater the moment of inertia and therefore the structure of the first layer 16 and, consequently, of the seismic isolator or abutment element 1 becomes stiffer.

As the thickness Z decreases, it is useful to use a core 18 having a higher density since, if subjected to bending, the core 18 is progressively more stressed at compression.

Also in the case of the first layers 16, they are interspersed with a plurality of second layers 7.

The adhesion between the first layers 6, 16 and second layers 7 or between the skins 17 and the core 18 of the first layers 16 and, subsequently, with the second layers 7 occurs using adhesive means.

Such adhesive means can comprise, in a version of the invention, the bonding layers composed by solvent-based or water-based adhesives or paints or without a diluent. In this way, excellent sealing results are obtained, while using materials able to respect the environment.

According to an exemplary embodiment, a first layer 16 can be made from a sandwich having an overall thickness of 17 mm, for a plate or layer length of 1.5 m. In this case, the sandwich has the following characteristics: weight equal to 4.3 Kg/m² and, if subjected to a load equal to 1000N/m², it has a deflection of 30 mm (possibly with a safety factor equal to 5.7).

Comparing a similar situation (load equal to 1000 N/m²), a traditional plate of steel, having a thickness of 5 mm, has a weight equal to 39 Kg/m², a deflection of 30 mm and a safety factor equal to 3.

It is thus seen that the present invention performs much more efficient and effective performances with respect to known solutions. In addition, since the type of response is not related to the particular structure (intended as the number or size of the layers) of the isolator device 1, but varies as a function of the type of dynamic stress (due to the presence of a material inside the device being able to vary its mechanical behavior according to the force it is subjected to), the use of the present invention is much safer for the constructions or structures to which the isolator device 1 is installed.

At the bases 3,4, the isolator device 1 and/or the seismic isolator 1A may comprise plates 20. Said plates 20 have a thickness greater than that of a first layer 6, 16 or a second layer 7. These plates are made of composite material or steel.

Said plates 20 have holes for fixing the isolator device 1 and/or the seismic isolator 1A to intermediate supports 21, placed between the plate 20 and the foundations F and/or the superstructure S of the construction.

The fixing between the plates 20 and the intermediate supports 21 can occur by suitable screws.

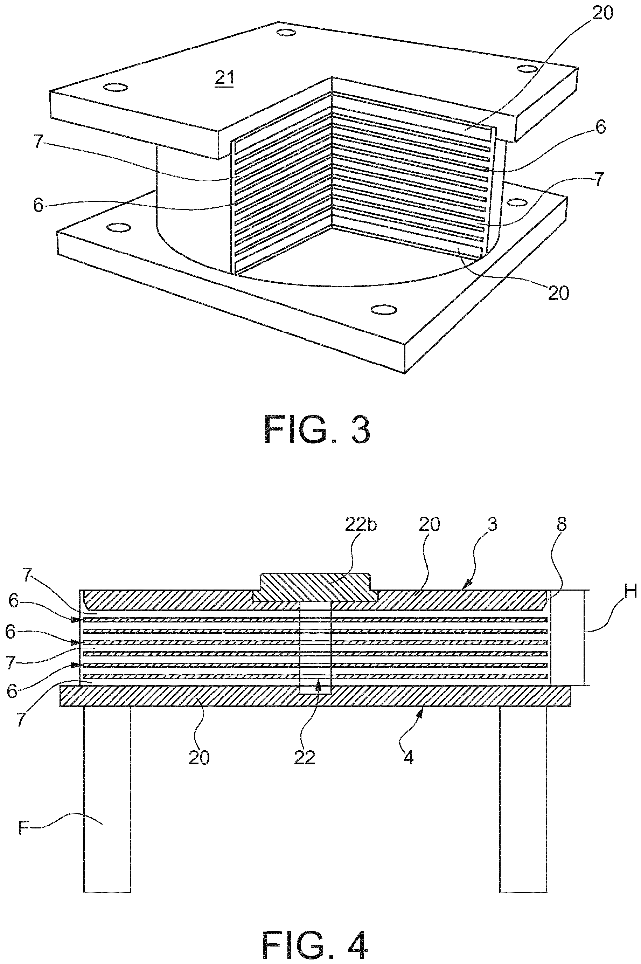

Such intermediate supports 21, in a version of the invention, for example shown in figure 3, can have a hollow recess for housing the plates 20 and or the seismic isolator 1A.

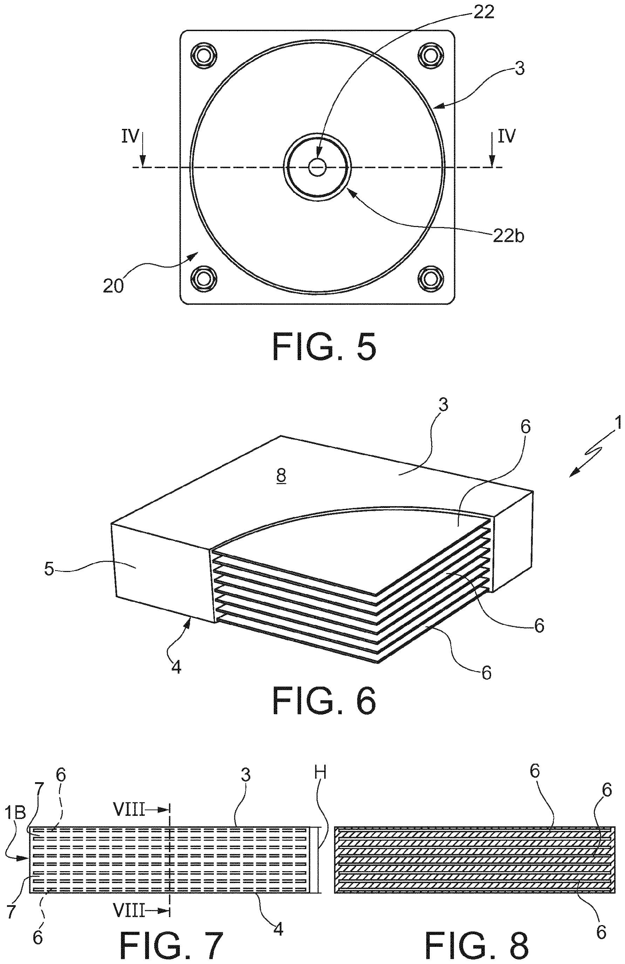

In a still further version of the invention, for example shown in figures 4 and 5, the isolator device 1 and/or the seismic isolator 1A can comprise at least one hole 22 which may remain empty for the entire life of the work or, sometimes, be filled with lead to increase the damping capability of the system.

The at least one hole 22 may have a cylindrical shape and extend from the base 3 towards the inside of the isolator device 1 and/or of the seismic isolator 1A.

In addition, at the base 3, there may be closing means 22b, to close the access of the hole 22.

A possible manufacturing method of the isolator device 1 comprises the following steps:
arranging a first layer 6, 16,
applying on a surface of the first layer 6, 16 an adhesive means,
drying the adhesive means,
repeating the aforesaid steps for each first layer 6, 16,
molding such plurality of first layers 6, 16 with the material constituting the second layers 7, obtaining the multilayer structure.

In addition, following or in a contextual manner, a step of molding the outer casing 8 may be provided.

The above-said molding step comprises the vulcanization of the material which composes the second layers 7 and/or of the outer casing 8, being such vulcanization able to couple the structure of the main body 2.

A further step which may be included in the method above comprises a step of cleaning the first layers 6, 16, by using suitable solvents, before the step of applying the adhesive means.

Further steps may comprise the application of one or more plates 20 and fixing them to at least one intermediate support 21.

Finally, the isolator device 1, possibly provided with a plate 20 and/or an intermediate support 21, is applied to the construction in question, for example placed between the foundations F and the superstructure S.

The invention thus conceived is susceptible to numerous modifications and variations, all falling within the inventive concept.

In addition, the features described for one embodiment of the invention may also be present in other embodiments described herein, without thereby departing from the scope of protection conferred by the present invention.

In addition, all the details can be replaced by other technically equivalent elements. In practice, the materials employed, as well as the shapes and the size, may be any according to requirements without thereby departing from the scope of protection of the following claims.

## Claims

1. Isolator device (1), such as for example a seismic isolator (1A) or an abutment element (1B) for constructions, for example buildings, bridges, large structures, infrastructures, etc. or non-structural works, for example pedestals for art works, e.g. statues or the like, for furniture, for industrial machinery, etc., provided with an overlying structure, for isolating or separating or spacing the overlying structure of said construction and a part of said construction integral with the foundations or with the ground in order to dissipate and/or absorb the forces or the energy generated by an earthquake or by a dynamic stress to which said construction is subjected, wherein said isolator device (1) comprises a plurality of first layers (6, 16) and a plurality of second layers (7), wherein said first layers (6, 16) and said second layers (7) are interposed or staggered with respect to each other, **characterized in that** said second layers (7) comprise a material having a mechanical behavior that is variable as a function of the type and/or of the intensity of the forces or of the energy generated by an earthquake or by a dynamic stress to which the isolator device (1) is subjected, wherein said second layers (7) comprise a non-Newtonian material or fluid, wherein said material, having a variable mechanical behavior as a function of the type and/or of the intensity of the forces or of the energy generated by an earthquake or by a dynamic stress to which the isolator device (1) is subjected, is said non-Newtonian material or fluid.

2. Isolator device (1) according to claim 1, wherein said non-Newtonian material or fluid is of the type having a "time independent" behavior, comprising a material of pseudoplastic nature, such as a solution of a polymer and/or a colloidal dispersion, or a material of dilatant nature.

3. Isolator device (1) according to the preceding claim, when said material of pseudoplastic nature comprises a solution of a polymer, wherein said solution of a polymer comprises at least one of the following polymers: liquid dispersions of synthetic arabic gum, such as for example tragacanth gum, acacia gum, or sodium alginate, methylcellulose, etc..

4. Isolator device (1) according to claim 2, when said material of pseudoplastic nature comprises a colloidal dispersion, wherein said colloidal dispersion comprises particles or aggregates of particles and/or comprises particles having dimensions comprised between 1 nm and 1 µm.

5. Isolator device (1) according to claim 2, when comprising a material of dilatant nature, wherein said material of dilatant nature comprises an elastomer, a viscous silicone liquid or a polymer matrix foam material.

6. Isolator device (1) according to claim 1, wherein said non-Newtonian material or fluid is of the type having a "time dependent" behavior, comprising a material of thixotropic nature or a material of rheopectic type.

7. Isolator device (1) according to any one of the preceding claims, wherein said second layers (7) are entirely made of said non-Newtonian material or fluid or wherein said second layers (7) comprise said non-Newtonian material or fluid within a matrix of polymer nature, comprising at least one polymer such as a natural or synthetic elastomer and/or a mixture of natural and/or synthetic elastomers, or rubber, or a plastic material, or within a matrix of non-polymer nature.

8. Isolator device (1) according to any one of the preceding claims, wherein said first layers (6, 16) are made of a metal material, such as steel, or of a composite material or of a polymer material.

9. Isolator device (1) according to the preceding claim when said first layers (6, 16) are made of a composite material, wherein said composite material comprises a matrix and a plurality of reinforcement elements or fibers, carbon fibers, glass fibers, ceramic fibers, aramid fibers or Kevlar fibers or natural fibers, for example linseed and/or hemp fibers, and/or wherein said plurality of reinforcement elements is free or embedded in the matrix or it is in the form of a sheet or fabric or of a plurality of multilayer fabrics, and/or wherein said matrix or said polymer material comprises a polymer material, an elastomer or a plastic material or a thermoplastic polymer, Nylon or ABS, or a thermosetting polymer, an epoxy resin or a polyester or a phenol resin or a mixture thereof and/or wherein said matrix comprises a chemical/physical process agent or necessary to confer specific properties to the material, a crosslinking agent, antioxidant, antiozonant, accelerant, activating agent or inert fillers, active fillers, photosensitive materials, heat-sensitive materials, adhesion promoters, flame retardant agents, etc., or a mixture thereof.

10. Isolator device (1) according to any one of the preceding claims, comprising said first means (6) made of a composite material or of a polymer material and said second layers (7), wherein said second layers (7) are made of the same composite or polymer material as said first layers (6), with the addition of the non-Newtonian material or fluid.

11. Isolator device (1) according to any one of the preceding claims, constituted by a main body (2) of shape substantially like a geometric solid or prism or cylinder, comprising two bases (3, 4), substantially parallel to each other and having polygonal or circular form, and a lateral surface (5), having tubular shape or comprising a series of lateral faces, wherein said first layers (6, 16) and said second layers (7) are substantially parallel to each other and to said bases (3, 4).

12. Isolator device (1) according to any one of the preceding claims, comprising first layers (16), which have a sandwich structure comprising a core (18) enclosed by two surfaces or skins (17), parallel to the bases (3, 4), wherein said surfaces or skins (17) comprise a composite material comprising a matrix and a plurality of reinforcement elements or fibers, for example glass fibers or carbon fibers or Kevlar fibers or ceramic fibers or aramid fibers and/or wherein said core (18) is made of a foam material, a thermosetting crosslinked polymer produced in the presence of a foaming agent, polyurethane foam, or an alveolar (honeycomb) material, for example a metal or plastic material having honeycomb (cells) structure, made of alveolar aluminum, alveolar polycarbonate, alveolar polypropylene, etc..

13. Isolator device (1) according to any one of the preceding claims, comprising an outer casing (8) made of natural or synthetic elastomer material and/or of a mixture of natural and/or synthetic elastomers or of a material of rubber type.

14. Isolator device (1) according to any one of the preceding claims, comprising adhesive means, for example an adhesive or a layer or a water paint, placed or applied between said first layers (6, 16) and said second layers (7) or between said surfaces or skins (17) and said core (18) and said second layers (7) and/or comprising at least one plate (20), placed at at least one of said bases (3, 4) and/or at least one intermediate support (21).

15. Method for making an isolator device (1), such as a seismic isolator (1A) or an abutment element (1B) according to any one of claims 1 to 14, comprising the following steps:
arranging a first layer (6, 16),
applying, on at least one surface of the first layer (6, 16), an adhesive means,
drying the adhesive means,
repeating the aforesaid steps for each first layer (6, 16),
arranging a plurality of second layers (7), wherein said second layers (7) comprise a material having a mechanical behavior that is variable as a function of the type and/or of the intensity of the forces or of the energy generated by an earthquake or by a dynamic stress to which the isolator device (1) is subjected,
wherein said second layers (7) comprise a non-Newtonian material or fluid,
wherein said material having a variable mechanical behavior as a function of the type and/or of the intensity of the forces or of the energy generated by an earthquake or by a dynamic stress to which the isolator device (1) is subjected, is said non-Newtonian material or fluid,
alternating a first layer (6, 16) with a second layer (7),
molding a plurality of first layers (6, 16) with the material of said plurality of second layers (7) interposed or staggered between said first layers (6, 16) and/or in a manner so as to obtain an outer casing (8).

16. Method according to claim 15, wherein said molding step comprises a step of vulcanizing the material that composes said second layers (7) and/or said outer casing (8).

17. Method according to claim 15, wherein said step of arranging said first layers (6, 16) comprises a preliminary step of cleaning said first layers (6, 16) by means of the use of suitable solvents, and/or comprising a step of applying one or more plates (20) and/or fixing the same to at least one intermediate support (21).
